# EUROPEAN PATENT APPLICATION

(11) **EP 4 647 984 A1**
(43) Date of publication of application: **12.11.2025**
(21) Application number: 25172262.5
(22) Date of filing: 24.04.2025
(51) Int. Cl.: G06Q 10/08, G06F 16/27, G06Q 10/087, G06Q 10/0875, G06Q 10/10, G06Q 20/20

(54) **COMPUTER SYSTEM AND METHOD FOR ASSET LOCATION AND MONITORING**

(30) Priority: 08.05.2024 US 202418658507
(71) Applicant: Schneider Electric USA, Inc., Andover, MA 01810 (US)
(72) Inventor: Pyle, Michael William, Hermitage, TN (US); Morganti, Margaret, Andover, MA (US)
(74) Representative: Manitz Finsterwald Patent- und Rechtsanwaltspartnerschaft mbB

(57) **Abstract**

Creating an electronic inventory database for a plurality of assets. Unique identifier information (e.g., a QR code) is obtained that is associated with an asset to be included in an inventory/backend database that is associated with installation at a certain location. Metadata associated with the unique identifier is determined that is indicative of least descriptive information associated with the asset. The asset metadata is stored in an inventory database in correlation with the installation location the asset is installed. A computer network coupled to each asset is scanned to detect the metadata and an IP address associated with each asset coupled to each installation location such that when detected metadata matches metadata stored in the inventory database for an asset, the IP address is indexed in the inventory database with the metadata and the installation location for the asset.

## Description

### BACKGROUND

### 1. FIELD

The disclosed embodiments generally relate to a computer-implemented method and system for information technology (IT) asset location, monitoring, identification, and security. More particularly, the disclosed embodiments relate to a system for determining location and identification of equipment in Operational Technology (OT) systems, and for providing monitoring and security for the OT assets.

### 2. DESCRIPTION OF RELATED ART

Inventory control of OT/IT assets in an equipment rack typically involved a person periodically visiting each equipment rack and record its location and the asset ID for each piece of equipment in the equipment rack. This information may be captured by someone's memory, by hand on a clipboard, or in a spreadsheet-type electronic table. For example, in order to uniquely identify equipment that serves a specific function among otherwise physically similar or identical equipment, the data center will typically print a paper label with a human readable asset ID and then affix this paper label to the server or equipment. The human readable paper label becomes the unique identifier that is used to identify the equipment. This approach is error prone, very labor intensive and risky for two reasons. First, the labels tend to fall off, and labels degrade over time. Additionally, the nature of the human interaction involved in creating, printing and affixing asset IDs can lead to some level of naming conflicts whereby the human readable names may be easily duplicated, mislabeled, misread, mis-affixed, and/or misidentified. Second, asset ID labels can identify a piece of equipment only if a technician can actually physically locate the piece of equipment. In order to locate the equipment, it is necessary to keep track of where a piece of equipment with a certain asset ID label is located. Typically, the data center will use some kind of inventory records and try to keep these records up to date. However, tracking and keeping current inventory records for equipment that is added, moved, and/or replaced on a continuous basis is very labor intensive and error prone. There is often a serious risk that the technician will work on, reconfigure, move or replace the wrong piece of equipment and cause significant, additional problems.

This, it is currently common practice in Information Technology (IT) systems, to expand little to no effort in creating and maintaining an accurate asset inventory in Operational Technology (OT) systems. However, in today's environment of heightened cyber security concerns, this has become a pressing need and priority for facility managers and process owners. Yet, the ability to create and maintain accurate asset inventories, and knowing the location of each asset, continues to elude many OT system owners. Once an asset inventory is established automating the use of it (extracting value) is a desirous need.

### SUMMARY

The purpose and advantages of the below described illustrated embodiments will be set forth in and apparent from the description that follows. Additional advantages of the illustrated embodiments will be realized and attained by the devices, systems and methods particularly pointed out in the written description and claims hereof, as well as from the appended drawings.

To achieve these and other advantages and in accordance with the purpose of the illustrated embodiments, in one aspect the disclosed embodiments relate to the utilization of labels (e.g., QR codes) in conjunction with commissioning and firmware update tools for creating and maintaining a hierarchical set of information about assets, and their associated location, in an asset inventory database.

In further aspects, a computer system and method for creating an electronic inventory database for a plurality of assets is described in which, obtained by a computer device, is a unique identifier associated with an asset to be included in the inventory database that is associated with installation at a certain location (installation location) having a computer network coupled to other installation locations. In certain embodiments, the unique identifier is a Quick Response (QR) code caused to be generated by the computer device coupled to a printing device. The computer device then determines metadata associated with the unique identifier that is indicative of least descriptive information associated with the asset. Stored by the computer device is the asset metadata in the inventory database which is in association with the installation location wherein the asset is operably coupled to the computer network. In certain embodiments, scanning of QR codes/unique identifiers, preferably by the computer device, enables generation of the inventory/backend database. The computer network is then scanned, preferably by the computer device, to detect the metadata (e.g., one or more of: a serial no.; device name; device type; model no; and firmware information relating to the asset it is associated with) and an IP address associated with each asset coupled to each installation location whereby when detected metadata matches metadata stored in the inventory database for an asset, the IP address is indexed in the inventory database with the metadata and the installation location for the asset.

### BRIEF DESCRIPTION OF THE DRAWINGS

So that those skilled in the art to which the subject disclosure appertains will readily understand how to make and use the devices and methods of the subject disclosure without undue experimentation, preferred illustrated embodiments thereof will be described in detail herein below with reference to certain figures, wherein:
FIG. 1 illustrates an example communication network utilized with one or more of the illustrated embodiments;
FIG. 2 illustrates an example network device/node utilized with one or more of the illustrated embodiments;
FIG. 3 is a network diagram indicating physical locations and associated assets in accordance with the illustrated embodiments; and
FIG. 4 is a flow diagram illustrating an exemplary computer implemented method for creating and maintaining an asset inventory database containing a hierarchical set of information associated with assets in accordance with the illustrated embodiments.

### DETAILED DESCRIPTION OF CERTAIN EMBODIMENTS

The illustrated embodiments are now described more fully with reference to the accompanying drawings wherein like reference numerals identify similar structural/functional features. The illustrated embodiments are not limited in any way to what is illustrated as the illustrated embodiments described below are merely exemplary, which can be embodied in various forms, as appreciated by one skilled in the art. Therefore, it is to be understood that any structural and functional details disclosed herein are not to be interpreted as limiting, but merely as a basis for the claims and as a representation for teaching one skilled in the art to variously employ the discussed embodiments. Furthermore, the terms and phrases used herein are not intended to be limiting but rather to provide an understandable description of the illustrated embodiments.

Unless defined otherwise, all technical and scientific terms used herein have the same meaning as commonly understood by one of ordinary skill in the art to which this invention belongs. Although any methods and materials similar or equivalent to those described herein can also be used in the practice or testing of the illustrated embodiments, exemplary methods and materials are now described.

It must be noted that as used herein and in the appended claims, the singular forms "a", "an," and "the" include plural referents unless the context clearly dictates otherwise. Thus, for example, reference to "a stimulus" includes a plurality of such stimuli and reference to "the signal" includes reference to one or more signals and equivalents thereof known to those skilled in the art, and so forth.

It is to be appreciated the illustrated embodiments discussed below are preferably a software algorithm, program or code residing on computer useable medium having control logic for enabling execution on a machine having a computer processor. The machine typically includes memory storage configured to provide output from execution of the computer algorithm or program in accordance with the illustrated embodiments.

As used herein, the term "software" is meant to be synonymous with any code or program that can be in a processor of a host computer, regardless of whether the implementation is in hardware, firmware or as a software computer product available on a disc, a memory storage device, or for download from a remote machine. The embodiments described herein include such software to implement the equations, relationships and algorithms described above. One skilled in the art will appreciate further features and advantages of the illustrated embodiments based on the above-described embodiments. Accordingly, the illustrated embodiments are not to be limited by what has been particularly shown and described, except as indicated by the appended claims.

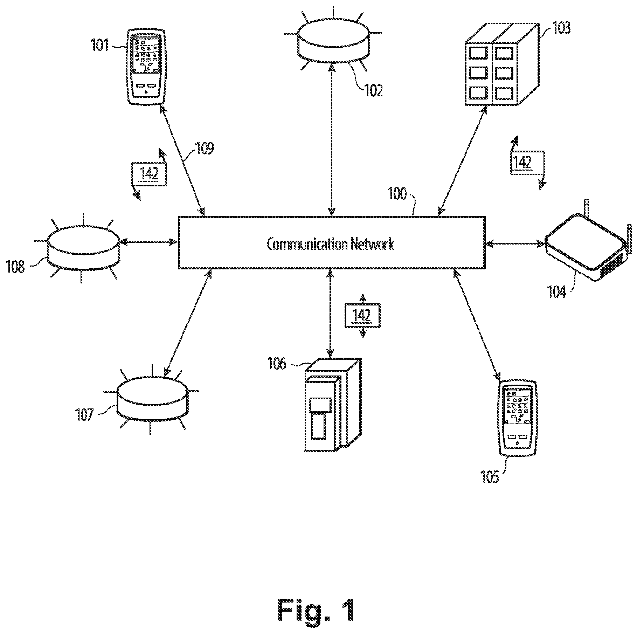

Turning now descriptively to the drawings, in which similar reference characters denote similar elements throughout the several views, FIG. 1 depicts an exemplary communications network 100 in which below illustrated embodiments may be implemented. It is to be understood a communication network 100 is a geographically distributed collection of nodes interconnected by communication links and segments for transporting data between end nodes, such as personal computers, work stations, smart phone devices, tablets, televisions, sensors and or other devices such as automobiles, etc. Many types of networks are available, with the types ranging from local area networks (LANs) to wide area networks (WANs). LANs typically connect the nodes over dedicated private communications links located in the same general physical location, such as a building or campus. WANs, on the other hand, typically connect geographically dispersed nodes over long-distance communications links, such as common carrier telephone lines, optical lightpaths, synchronous optical networks (SONET), synchronous digital hierarchy (SDH) links, or Powerline Communications (PLC), and others.

FIG. 1 is a schematic block diagram of an example communication network 100 illustratively comprising nodes/devices 101-108 (e.g., sensors 102, client computing devices 103 (e.g., asset inventory creation/maintenance devices), smart phone devices 105, web servers 106, routers 107, switches 108, databases, and the like) interconnected by various methods of communication. For instance, the links 109 may be wired links or may comprise a wireless communication medium, where certain nodes are in communication with other nodes, e.g., based on distance, signal strength, current operational status, location, etc. Moreover, each of the devices can communicate data packets (or frames) 142 with other devices using predefined network communication protocols as will be appreciated by those skilled in the art, such as various wired protocols and wireless protocols etc., where appropriate. In this context, a protocol consists of a set of rules defining how the nodes interact with each other. Those skilled in the art will understand that any number of nodes, devices, links, etc. may be used in the computer network, and that the view shown herein is for simplicity. Also, while the embodiments are shown herein with reference to a general network cloud, the description herein is not so limited, and may be applied to networks that are hardwired.

As will be appreciated by one skilled in the art, aspects of the illustrated embodiments may be embodied as a system, method or computer program product. Accordingly, aspects of the illustrated embodiments may take the form of an entirely hardware embodiment, an entirely software embodiment (including firmware, resident software, micro-code, etc.) or an embodiment combining software and hardware aspects that may all generally be referred to herein as a "device", "apparatus", "module" or "system." Furthermore, aspects of the illustrated embodiments may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain or store a program for use by or in connection with an instruction execution system, apparatus, or device. A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing. Computer program code for carrying out operations for aspects of the present invention may be written in any combination of one or more programming languages, including an object oriented programming language such as Java, Smalltalk, C++, Python, or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the illustrated embodiments are described below with reference to flowchart illustrations and/or block diagrams of methods, apparatus (systems) and computer program products according to the illustrated embodiments. It will be understood that each block of the flowchart illustrations and/or block diagrams, and combinations of blocks in the flowchart illustrations and/or block diagrams, can be implemented by computer program instructions. These computer program instructions may be provided to a processor of a computer device, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium generate and maintain an inventory asset database including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

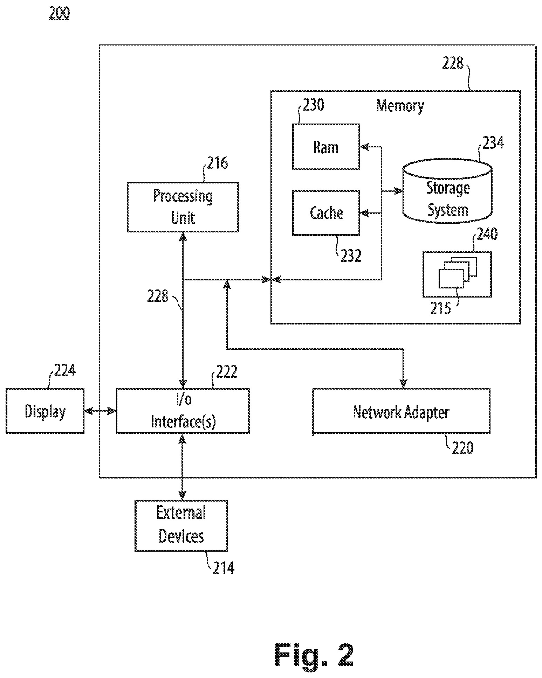

FIG. 2 is a schematic block diagram of an example network computing device 200 (e.g., asset inventory creation/maintenance device 103, server/backend database 106, etc.) that may be used (or components thereof) with one or more embodiments described herein (e.g., as one of the nodes shown in the network 100) for providing a computer-implemented process for creating and maintaining an asset inventory database containing a hierarchical set of location information associated with assets. As explained above, in different embodiments these various devices are configured to communicate with each other in any suitable way, such as, for example, via communication network 100.

Device 200 is intended to represent any type of computer system capable of carrying out the teachings of various illustrated embodiments. Device 200 is only one example of a suitable system and is not intended to suggest any limitation as to the scope of use or functionality of the illustrated embodiments described herein. Regardless, computing device 200 is capable of being implemented and/or performing any of the functionality set forth herein, particularly for creating and maintaining an asset inventory database containing a hierarchical set of information associated with assets, and further preferably providing secure software updates for the inventoried assets.

It is to be understood and appreciated that computing device 200 is operational with numerous other general purpose or special purpose computing system environments or configurations. Examples of well-known computing systems, environments, and/or configurations that may be suitable for use with computing device 200 include, but are not limited to, personal computer systems, server computer systems, thin clients, thick clients, hand-held or laptop devices, multiprocessor systems, microprocessor-based systems, network PCs, minicomputer systems, and distributed data processing environments that include any of the above systems or devices, and the like. Computing device 200 may be described in the general context of computer system-executable instructions, such as program modules, being executed by a computer system. Generally, program modules may include routines, programs, objects, components, logic, data structures, and so on that perform particular tasks or implement particular abstract data types. Computing device 200 may be practiced in distributed data processing environments where tasks are performed by remote processing devices that are linked through a communications network 100. In a distributed data processing environment, program modules may be located in both local and remote computer system storage media including memory storage devices.

The components of device 200 may include, but are not limited to, one or more processors or processing units 216, a system memory 228, and a bus 218 that couples various system components including system memory 228 to processor 216. Bus 218 represents one or more of any of several types of bus structures, including a memory bus or memory controller, a peripheral bus, an accelerated graphics port, and a processor or local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus. Computing device 200 typically includes a variety of computer system readable media. Such media may be any available media that is accessible by device 200, and it includes both volatile and non-volatile media, removable and non-removable media.

System memory 228 can include computer system readable media in the form of volatile memory, such as random-access memory (RAM) 230 and/or cache memory 232. Computing device 200 may further include other removable/non-removable, volatile/non-volatile computer system storage media. By way of example only, storage system 234 can be provided for reading from and writing to a non-removable, non-volatile magnetic media (not shown and typically called a "hard drive"). Although not shown, a magnetic disk drive for reading from and writing to a removable, non-volatile magnetic disk, and an optical disk drive for reading from or writing to a removable, non-volatile optical disk such as a CD-ROM, DVD-ROM or other optical media can be provided. In such instances, each can be connected to bus 218 by one or more data media interfaces. As will be further depicted and described below, memory 228 may include at least one program product having a set (e.g., at least one) of program modules (240) that are configured to carry out the functions of embodiments of illustrated embodiments such as creating and maintaining an asset inventory database containing a hierarchical set of information associated with assets, and preferably further providing secure software updates for the inventoried assets.

Program/utility 240, having a set (at least one) of program modules 215, such as an asset inventory module, may be stored in memory 228 by way of example, and not limitation, as well as an operating system, one or more application programs, other program modules, and program data. Each of the operating systems, one or more application programs, other program modules, and program data or some combination thereof, may include an implementation of a networking environment. Program modules 215 generally carry out the functions and/or methodologies of the illustrated embodiments as described herein.

Device 200 may also communicate with one or more external devices 214 such as a keyboard, a pointing device, a display 224, etc.; one or more devices that enable a user to interact with computing device 200; and/or any devices (e.g., network card, modem, etc.) that enable computing device 200 to communicate with one or more other computing devices. Such communication can occur via Input/Output (I/O) interfaces 222. Still yet, device 200 can communicate with one or more networks such as a local area network (LAN), a general wide area network (WAN), and/or a public network (e.g., the Internet) via network adapter 220. As depicted, network adapter 220 communicates with the other components of computing device 200 via bus 218. It should be understood that although not shown, other hardware and/or software components could be used in conjunction with device 200. Examples, include, but are not limited to: microcode, device drivers, redundant processing units, external disk drive arrays, RAID systems, tape drives, and data archival storage systems, etc.

FIGS. 1 and 2 are intended to provide a brief, general description of an illustrative and/or suitable exemplary environment in which the below described illustrated embodiments may be implemented. FIGS. 1 and 2 are exemplary of a suitable environment and are not intended to suggest any limitation as to the structure, scope of use, or functionality of an illustrated embodiment. A particular environment should not be interpreted as having any dependency or requirement relating to any one or combination of components illustrated in an exemplary operating environment. For example, in certain instances, one or more elements of an environment may be deemed not necessary and omitted. In other instances, one or more other elements may be deemed necessary and added.

With the exemplary communication network 100 (FIG. 1) and computing device 200 (FIG. 2) being generally shown and discussed above, description of certain illustrated embodiments will now be provided. It is to be understood and appreciated that exemplary embodiments implementing one or more components of FIGS. 1-4 relate to computer devices and processes for creating and maintaining an asset inventory database containing a hierarchical set of information (including physical location information) associated with assets (e.g., circuit breaker components), and preferably providing secure software updates for the inventoried assets.

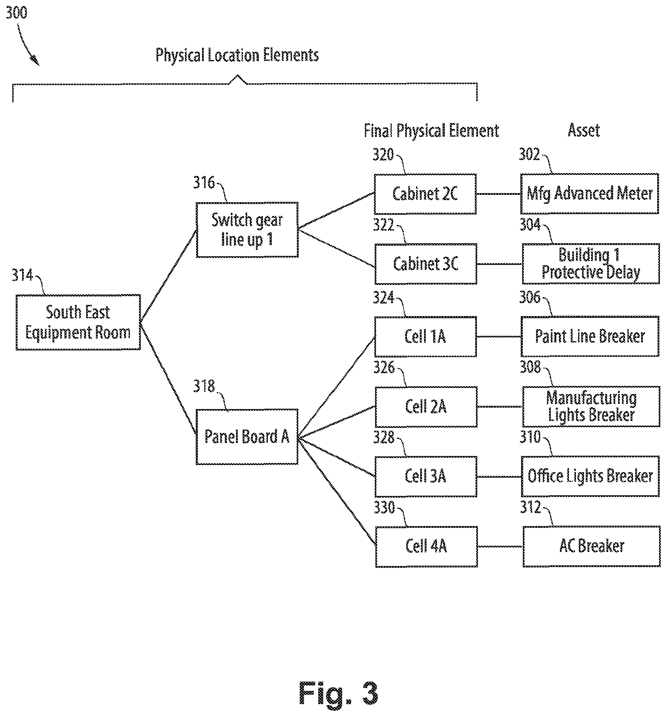

In accordance with the illustrated embodiments, a unique label is created and provided with each Operation Technology (OT) asset (e.g., 302-312 of FIG. 3). An example of an OT asset may be a circuit breaker component, however the disclosed illustrated embodiments are not to be understood to be restricted for use with such OT circuit breaker assets, as the disclosed illustrated embodiments are to be applicable for use with any OT asset (preferably having an associated IP address) that are to be cataloged in an inventory asset database, and preferably associated with a certain physical location. Additionally, in accordance with the disclosed illustrated embodiments, the unique labels that are to be associated with the OT assets and the physical locations OT assets are disposed within (e.g., a component cabinet, room, building, etc.) will hereinafter be described in terms of a Quick Response (QR) code/label. It is to be appreciated and understood however the disclosed illustrated embodiments are not to be understood to be limited to such QR code labels, as other labels preferably having printed indicia indicative of metadata descriptive of the device (e.g., circuit breaker component) and/or location (e.g., a component cabinet and its physical location) it is affixed/associated with are to be encompassed by the illustrated embodiments.

In accordance with the illustrated embodiments, a hierarchical set of unique QR codes are created for each physical location (e.g., 314-330) where the OT assets (302-312) reside. For instance, this may include, starting with the room (e.g., 314), then mounting structure (switch board, panel board, rack, etc.)(e.g., 316, 318), then location within the mounting structure (cell, cabinet, slot, etc.)(e.g., 302-312), and placed on each aforementioned location. In certain embodiments, the QR codes are caused to be generated by the computer device 103 coupled a printing device for printing QR codes. For instance, a QR code may be generated "on-demand" when the physical device location and network address are known in addition to the general device metadata such as model number, serial number etc. (as described further herein).

In accordance with the illustrated embodiments, scanning of the QR code, (e.g., by an optical scanning device operatively coupled to a computer device 103) provides a digital fingerprint that is unique per printing of the same QR code to be determined and associated with the QR code and recorded in a backend database system (e.g., 106). Additionally, in accordance with the illustrated embodiments, when a QR code is scanned during a firmware upgrade process (e.g., via computer device 103), preferably for an OT asset (302-312), its fingerprint is determined and checked against the fingerprint on file in the inventory database (e.g., 106) to authenticate the QR code as genuine, which thus provides for anti-counterfeiting of QR codes associated with OT assets and physical locations.

Preferably, the assets (e.g., 302-312) physical mounting structures (e.g., 316-330) are shipped with the QR codes already affixed thereto. Additional QR codes may be provided (including printing/generation of a QR code label) for the room (e.g., 314) and other needs as they arise (e.g., addition of new/replacement OT assets). During commissioning of an OT asset (e.g., 302-312), each physical location QR code (e.g., 302-330) is scanned by a computer device 103, and its name and descriptive physical location information as well as the QR code of the physical element it is a member of is preferably determined and entered in the database 106 by the computer 103. The QR code, location information, (e.g., cabinet 2C, 320), and QR code of the next level up element it is a member of (e.g., Switchgear Line up 1, 316), is then preferably recorded in the backend database 106. It is to be appreciated this constructs the hierarchy of physical locations in the database 106. Alternately, information for each aforesaid QR code is entered in computer device 103 prior to arrival on site using the information in the electrical one-line diagrams and the QR codes printed by a device/asset supplier/manufacturer and then placed at their appropriate locations during onsite OT asset commissioning. In certain embodiments, and as further described herein, QR Codes are scanned using a mobile app or software on a portable computer device 103 (e.g., a laptop) so as to create/generate the initial backend database 106.

In accordance with the illustrated embodiments, during commissioning of an OT asset (e.g., 302-312), its QR code, as well as the QR code of the final element it is mounted in (e.g., Cell 4A, 330) are scanned by the computer device 103 and recorded in the backend database 106. Preferably, the information retrieved by computer device 103 upon the scanning of an OT asset includes the serial number and other device specific information regarding the OT asset, such as type of device (where applicable), and may further include the firmware version(s) of the OT asset that was
factory/manufacturer/supplier provided.

Preferably, once all device OT asset QR codes are scanned by the tool/inventory computer device 103, the tool/inventory computer device 103 then scans the network (e.g., network 100) the OT assets (e.g., 302-312) are preferably commonly coupled to for preferably retrieving the serial number and IP address associated with each OT asset so as to match the serial number of the scanned OT asset with a serial number stored in the backend database (e.g., 106), such that when matching serial numbers are determined, the aforesaid associated IP address is then also stored in the inventory database in correlation with its serial number. Any IP addresses found that do not match with an entry in the backend asset inventory database are flagged and highlighted for further attention.

Additionally, in accordance with certain embodiments, when firmware updates and/or patches need to be installed for the certain OT assets (e.g., 302-312), the tool/inventory computer device 103 captures the device information for the OT assets, via communications network (e.g., 100) so as to validate that information against the information retrieved from the device's QR code that is stored in the backend database 106 to ensure they match. If the information stored in the backend database 106 and that retrieved from the OT asset do not align, preferably an alert is raised. And if verified (the information matches), a firmware update tool preferably provided in the tool/inventory computer device 103 proceeds to upload new firmware to the OT asset device and updates the device's information (using the information retrieved from the OT asset device) in the backend database 106, preferably with the firmware version the device was updated to. Preferably, communication with the backend asset inventory database 106 occur over a secure Transport Layer Security (TLS) connection.

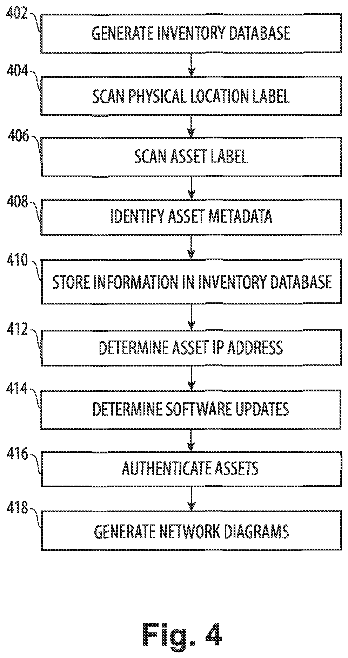

With a brief description of certain illustrated embodiments provided above, and with reference now to FIGS. 3 and 4 (and with continuing reference to Figs. 1 and 2), a process 400 for creating and maintaining an asset inventory database 106 containing a hierarchical set of information associated with assets in accordance with an illustrative embodiment is now described. It is to be understood and appreciated that FIGS. 1-4 are exemplary of a suitable environment and are not intended to suggest any limitation as to the structure, scope of use, or functionality of an illustrated embodiment. A particular environment should not be interpreted as having any dependency or requirement relating to any one or combination of components illustrated in an exemplary operating environment. For example, in certain instances, one or more elements of an environment may be deemed not necessary and omitted. In other instances, one or more other elements may be deemed necessary and added.

With reference now to process 400 of FIG. 4, a computer-implemented method for creating and maintaining an asset inventory database containing a hierarchical set of information associated with assets in accordance with an illustrative embodiment is now described. Starting at step 402, an inventory database (106) (as described further below) is preferably generated by a computer device 103, which database 106 preferably contains a structured inventory database including a plurality of physical locations (314-318 and 320-330), wherein an asset (e.g., 302) and the installation location (e.g., 320) the asset is to be associated with, is hierarchically associated within at least one other physical location (e.g., 314, 316). At step 404, the computer device 103 scans preferably a Quick Response (QR) code associated with an installation location (e.g., 320) an asset (e.g., 302) is to be associated with. Each installation location (314-318 and 320-330) and asset (e.g., 302-312) is preferably communicatively coupled to a common computer network (e.g., 100). The scanned QR code provides metadata (e.g., location metadata) indicative of the installation location (e.g., 320) and each physical location (e.g., 314, 316) hierarchically associated with the installation location (e.g., 320).

Next, at step 406, the computer device 103 preferably scans a QR code associated with the asset (e.g., 302) to be included in the inventory database 106. Afterwards, at step 408, the computer device 103 preferably determines metadata (asset metadata) associated with the scanned asset QR code (step 406) that is indicative of least descriptive information associated with the asset (such as, but not limited to: a serial no.; device name; device type; model no; and firmware information relating to the asset (e.g., 302) it is associated with). Next, at step 410, the computer device 103 stores the aforesaid determined asset and location metadata in the inventory database 106 such that they are associated/correlated with each other.

At step 412, the computer device 103 that is operatively coupled to the database 106 and the communication network 100 common to each asset (e.g., 302-312) and physical location (314-318 and 320-330), preferably scans the computer network 100 to detect at least the asset metadata and an IP address associated with each asset (e.g., 302-312). The computer device 103 is then operative to determine when the scanned asset metadata matches the asset metadata stored in the inventory database (step 410) for an asset (e.g., 302). When a match is determined, the detected IP address for that asset (e.g., 302) is then indexed in the inventory database 106 so as to also be correlated/associated with the asset and location metadata previously stored in the inventory database 106 (step 310) for that asset (e.g., 302).

In certain illustrated embodiments, at step 414, the computer device 103 is further operative and configured to determine software/firmware update availability for each asset (e.g., 302-312) in the inventory database 106 by preferably detecting availability of a software and/or firmware update, from one or more databases preferably external of the inventory database, relating to each asset (e.g., 302-312) stored in the asset inventory database 106. For instance, when the software/firmware version of an asset (e.g., 302) is stored in the inventory database 106, and the computer device 103 determines there is an update available for that software/firmware version for that asset (e.g., 302), a software update tool/module preferably provided and/or associated with the computer device 103 is configured and operative to cause that asset (e.g., 302) to be updated with the detected new software/firmware version. Alternatively, the computer device 103 sends a message/notification (preferably via a known suitable communication channel (e.g., email, txt, computer text, etc.)) to a network administrator indicating the availability of such an updated software/firmware version for that asset (e.g., 302).

In certain other illustrated embodiments, the computer device 103 is further operative and configured at step 416 to determine the authenticity of a QR code physically associated with an asset (e.g., 302) by comparing the asset metadata associated with the QR code physically associated with an asset to the asset metadata previously stored (step 410) in the inventory database 106 relating to that asset. For instance, if a match is not determined, then this may be indicative that the asset device (e.g., 302) may have been tampered with (e.g., exchanged with a counterfeit device) since its QR code physically associated with it does not match the one previously stored (step 410) in the inventory database 106 that was previously associated with it (e.g., at the time of its installation).

In yet further illustrative embodiments, the computer device 103 is configured and operative to generate a computer network diagram indicative of hierarchically associated physical locations (e.g., 314-318 and 320-330) and assets (e.g., 302-312) included in the hierarchically associated physical locations (e.g., as shown in FIG. 3). For instance, the generated computer network diagram may include pictorial representations associated with each respective physical location and asset identified in the computer network diagram.

With certain illustrated embodiments described above, it is to be appreciated that various non-limiting embodiments described herein may be used separately, combined or selectively combined for specific applications. Further, some of the various features of the above non-limiting embodiments may be used without the corresponding use of other described features. The foregoing description should therefore be considered as merely illustrative of the principles, teachings and exemplary embodiments of this invention, and not in limitation thereof.

It is to be understood that the above-described arrangements are only illustrative of the application of the principles of the illustrated embodiments. Numerous modifications and alternative arrangements may be devised by those skilled in the art without departing from the scope of the illustrated embodiments, and the appended claims are intended to cover such modifications and arrangements.

## Claims

1. A computer-implemented method for creating an electronic inventory database for a plurality of assets, comprising:
obtaining, by a computer device, a unique identifier associated with at least a first asset of the plurality of assets to be included in the inventory database that is associated with installation at a certain location (installation location) wherein a computer network is commonly associated to the installation location, other installation locations and the computer device;
determining, by the computer device, metadata associated with the unique identifier that is indicative of descriptive information associated with the first asset (asset metadata);
storing, by the computer device, the asset metadata in the inventory database in association with the installation location the first the asset is operably associated with;
scanning, by the computer device, the computer network to detect metadata and an IP address associated with the first asset on the computer network whereby when detected metadata matches the asset metadata stored in the inventory database for the first asset, the detected IP address is indexed in the inventory database with the asset metadata and the installation location for the first asset.

2. The computer-implemented method as recited in claim 1, wherein the unique identifier is a Quick Response (QR) code.

3. The computer-implemented method as recited in claim 2, wherein the QR code is caused to be generated by a printing device coupled to the computer device.

4. The computer-implemented method as recited in claim 2 or 3, wherein the inventory database is generated by scanning one or more QR codes by the computer device.

5. The computer-implemented method as recited in any one of the preceding claims, wherein obtaining the unique identifier associated with the first asset to be included in the inventory database further includes determining, by the computer device, the installation location the first asset is to be installed at.

6. The computer-implemented method as recited in any one of the preceding claims, wherein the inventory database is structured to include a plurality of physical locations, wherein an installation location the first asset is associated with is hierarchically associated within at least one other physical location whereby the computer device hierarchically associates a plurality of physical locations the first asset is hierarchically associated with.

7. A computer-implemented method for creating an electronic inventory database for a plurality of assets, comprising:
generating, by a computer device, an inventory database structured to include a plurality of hierarchically associated physical locations;
scanning, by the computer device, a Quick Response (QR) code associated with an installation location at least a first asset of the plurality of assets is to associated with, wherein a computer network is commonly coupled to the first asset, the installation location and other installation locations and, wherein the scanned QR code provides metadata (location metadata) indicative of the installation location and at least one other physical location hierarchically associated with the installation location;
scanning, by the computer device, a QR code associated with the at least first asset to be included in the inventory database;
determining, by the computer device, metadata (asset metadata) associated with the scanned asset QR code that is indicative of least descriptive information associated with the first asset;
storing, by the computer device, the asset metadata and location metadata in the inventory database in association with each other; and
scanning, by the computer device, the computer network to detect metadata and an IP address associated with the first asset on the computer network whereby when the detected metadata matches the asset metadata stored in the inventory database for the first asset, the detected IP address is indexed in the inventory database in association with the first asset.

8. The computer-implemented method as recited in claim 1 or 7, wherein the asset metadata includes one or more of: a serial no.; device name; device type; model no; MAC address; and firmware information relating to the first asset.

9. The computer-implemented method as recited in claim 1 or 7, further including determining, by the computer device, software update availability for the first or for each of the plurality of assets in the inventory database by detecting availability of a software and/or firmware update, from one or more databases external of the inventory database, relating to the first or to each of the plurality of assets stored in the asset database.

10. The computer-implemented method as recited in claim 2 or 8, further including determining, by the computer device, authenticity of a QR code physically associated with the first or the at least first asset by comparing the metadata associated with the QR code physically associated with the first asset to the asset metadata stored in the inventory database relating to the first asset.

11. The computer-implemented method as recited in claim 1 or 9, further including, generating by the computer device, a computer network diagram indicative of all hierarchically associated physical locations and each of the plurality of assets included in the hierarchically associated physical locations.

12. The computer-implemented method as recited in claim 11, wherein generating the computer network diagram further includes generating pictorial representations associated with each respective physical location and each of the plurality of assets identified in the computer network diagram.

13. A computer device for creating an electronic inventory database for a plurality of assets, comprising:
a memory configured to store instructions;
a processor disposed in communication with said memory, wherein said processor upon execution of the instructions is configured to:
receive, by scanning a Quick Response (QR) code associated with at least a first asset of the plurality of assets, metadata associated with the first asset to be included in the inventory database (asset metadata), wherein the first asset is associated with installation at a certain location (installation location), wherein a computer network is commonly coupled to the installation location, the first asset and other installation locations;
store the asset metadata in the inventory database in association with the installation location the asset is operably coupled to; and
scan the computer network to detect metadata and an IP address associated with the first asset on the computer network whereby when the detected metadata matches the asset metadata stored in the inventory database for the first asset, the detected IP address is indexed in the inventory database with the asset metadata and the installation location for first asset.

14. The computer device as recited in claim 13, wherein the inventory database is structured to include a plurality of physical locations, wherein the installation location the first asset is associated with is hierarchically associated within at least one other physical location,
wherein the processor is in particular further configured to determine each hierarchically associated physical location the first asset is associated with.

15. The computer device as recited in claim 13 or 14, wherein the processor is further configured to:
determine software update availability for each of the plurality of assets included in the inventory database by detecting availability of a software and/or firmware update, from one or more databases external of the inventory database, relating to one or more of the plurality of assets stored in the inventory database; and
determine authenticity of a QR code physically associated with at least one of the plurality of assets stored in the database by comparing the metadata associated with the QR code physically associated with at least one of the plurality of assets to the asset metadata stored in the inventory database relating to that at least one of the plurality of assets.
